# EUROPÄISCHE PATENTSCHRIFT

(11) **EP 2 367 009 B1**
(45) Veröffentlichungstag und Bekanntmachung des Hinweises auf die Patenterteilung: **29.07.2015**
(21) Anmeldenummer: 11156934.9
(22) Anmeldetag: 04.03.2011
(51) Int. Cl.: G01N 35/00

(54) **Probenanalyse- und/oder Probenbearbeitungssystem**
Sample analysis and/or sample processing system
Système d'analyse d'échantillons et/ou de traitement d'échantillons

(30) Priorität: 19.03.2010 DE 102010016029
(43) Veröffentlichungstag der Anmeldung: 21.09.2011
(73) Patentinhaber: LCTech GmbH, 84405 Dorfen (DE)
(72) Erfinder: Brandlhuber, Martin, 84427, St. Wolfgang (DE)
(74) Vertreter: Tetzner, Michael

(56) Entgegenhaltungen:
- WO-A2-2006/124211
- DE-U1- 20 314 509
- DE-U1-202006 000 879
- GB-A- 2 260 974
- US-A- 5 573 727
- US-A1- 2004 219 678
- US-B1- 6 635 225

## Beschreibung

Die Erfindung betrifft ein Probenanalyse- und/oder Probenbearbeitungssystem mit einem Robotiksystem, wobei das Robotiksystem wenigstens einen Träger, in dem ein oder mehrere Objekte gehaltert sind, und einen Roboter zum Anfahren der Objekte im Träger aufweist.

Robotiksysteme werden beispielsweise zur vollautomatischen Analyse und/oder Bearbeitung von Proben verwendet. Hierzu werden üblicherweise mehrere Träger mit jeweils einer Vielzahl von Objekten in einer Ebenen angeordnet, wobei die einzelnen Proben vom Roboter angefahren werden, um dort beispielsweise Teile der Proben zum Bearbeiten oder zu Analysezwecken zu verbringen. Bei den Proben handelt es sich beispielsweise um flüssige oder feste, in einem Behälter gelagerte Stoffe.

Bei einem aus der Praxis bekannten System werden die Träger nebeneinander an einer Schiene befestigt. Bei einem anderen System werden die Träger auf einer Plattform abgestellt, wobei die Träger in vorbestimmten Positionen eingerastet werden können. Zur Initialisierung des Robotiksystems fährt man die einzelnen Träger mit dem Roboter an, um die genaue Position der Träger bzw. deren Objekte im System zu hinterlegen. Diese bekannten Systeme sind jedoch nicht dafür ausgelegt, ständig wechselnde Arbeiten durchzufiihren, die geänderte Trägerpositionen und/oder Objekte bedingen.

Aus der DE 689 08 634 T2 ist ferner ein Verfahren und eine Einrichtung zum Steuern von Hochlagern bekannt. In der GB 2 260 974 A wird ein automatisches System zum Zurückholen von ausgewählten, auf Bügeln abgelegten Kleidungsstücken beschrieben.

Die US 2004/0219678 A1 zeigt ein Verfahren und ein System zum Transportieren und Sortieren von in Trägern gehalterten Objekten, wobei die Träger an festen Positionen an einem Gestell gehaltert sind und die Objekte über einen Greifer angefahren werden.

Die US 6 635 225 B1 betrifft einen Färbeautomat zum Einfärben von Objekten zur mikroskopischen Untersuchung, wobei Träger mit mehreren Objekten über einen Positioniermechanismus in verschiedenen Behältern abgesenkt werden können.

Ein roboterbasiertes automatisiertes Medikamenten-Verarbeitungs-System ist ferner aus der WO 2006/124211 A2 bekannt, bei dem Träger an verschiedenen Koppelpositionen in einem Karussell gehaltert sind, wobei dieses Träger jeweils mit mehreren Objekten bestückt sind, die von einem Roboter einzeln angefahren werden können.

Der Erfindung lag die Aufgabe zugrunde, ein Probenanalyse- und/oder Probenbearbeitungssystem mit einem Robotiksystem zu schaffen, das eine sehr flexible Kombination und Positionierung der Träger mit gleichen oder unterschiedlichen Objekten ermöglicht.

Erfindungsgemäß wird diese Aufgabe durch die Merkmale des Anspruches 1 gelöst.

Das erfindungsgemäße Probenanalyse- und/oder Probenbearbeitungssystem weist ein Robotiksystem mit im Wesentlichen folgenden Bestandteilen auf:
a. wenigstens einen Träger, in dem ein oder mehrere Objekte gehaltert sind,
b. einen Positionierbereich mit einer Vielzahl von definierten Positionen zur Positionierung des wenigstens einen Trägers,
c. einen Roboter zum Anfahren jedes der in den Trägern gehalterten Objekte und
d. eine Steuereinheit zur Speicherung der Position des Trägers und der darin gehalterten Objekte und zur Ansteuerung des Roboters,
wobei, der Positionierbereich ein längliches Profilelement mit einer Vielzahl von in der Steuereinheit hinterlegten Koppelpositionen aufweist und der Träger Kopplungsmittel zum Einhängen des Trägers in einer der in der Steuereinheit hinterlegten Koppelpositionen an dem länglichen Profilelement vorsieht, wobei die Träger an einer Vielzahl von unterschiedlichen Kopplungspositionen eingehängt werden können und das längliche Profilelement eine Vielzahl von kammartig angeordneten Stegen aufweist, wobei zwischen den Stegen Zwischenräume ausgebildet sind, in welche die Kopplungsmittel des Trägers bei eingehängtem Träger spielfrei aufgenommen sind.

Die Träger werden somit lediglich an einer gewünschten Koppelposition eingehängt. Da jede denkbare Koppelposition in der Steuereinheit bereits hinterlegt ist, muss das System nur noch wissen, an welcher Position der Träger eingehängt wurde. Dies kann beispielsweise dadurch geschehen, dass alle Koppelpositionen mit entsprechenden Beschriftungen, beispielsweise Ziffern, versehen sind, sodass man nur noch angeben muss, um welche Art von Träger es sich handelt und an welcher Koppelposition er eingehängt ist.

Im Rahmen der Erfindung ist es aber auch vorstellbar, dass der Träger mit einer entsprechenden Markierung, einem Sender oder dergleichen versehen ist, um so eine automatische Identifizierung und Lokalisierung der Träger zu ermöglichen. Hierfür kann beispielsweise ein RFID-System zum Einsatz kommen.

Bei den zu analysierenden oder zu bearbeitenden Proben handelt es sich beispielsweise um flüssige oder feste, in einem Behälter gelagerte Stoffe oder Stoffgemische, wie sie beispielsweise in der Lebens-, Futtermittel-, Umwelt- und pharmazeutischen Analytik vorkommen.

Weitere Ausgestaltungen der Erfindung sind Gegenstand der Unteransprüche.

Der Roboter und vorzugsweise auch das längliche Profilelement können an einem Gestell gehaltert sein.

Gemäß einer bevorzugten Ausgestaltung weisen die Kopplungsmittel des Trägers wenigstens einen ersten Einhängehaken auf, der am länglichen Profilelement eingehängt wird. Die Kopplungsmittel können weiterhin wenigstens einen zweiten Einhängehaken oder Zapfen aufweisen, der mit einem entsprechend komplementär ausgebildeten Aufnahmebereich des länglichen Profilelements zusammenwirkt. Dieser Aufnahmebereich kann beispielsweise durch eine in Richtung des Trägers vorstehende und sich über die Länge des länglichen Profilelements erstreckende, hakenartige Leiste gebildet wird, in die der zweite Einhängehaken oder Zapfen eingereift. Die kammartig angeordneten Stege können dabei auf der den wenigstens einen eingehängten Träger zugewandten oder abgewandten Seite vorgesehen werden.

Weiterhin ist es zweckmäßig, wenn das längliche Profilelement horizontal ausgerichtet ist und das längliche Profilelement und die Kopplungsmittel des Trägers derart ausgebildet sind, dass der Träger beim Einhängen in vertikaler Richtung in die gewünschte Koppelposition abgesenkt wird. Vorzugsweise werden die Kopplungsmittel durch ein erstes und ein zweites Kopplungsmittel gebildet, die gleichartig ausgebildet und im eingehängten Zustand des Träger in Längsrichtung des länglichen Profilelements mit Abstand zueinander am Träger angeordnet sind. Auf diese Weise kann eine sehr stabile und spielfreie Halterung der Träger erreicht werden. Gemäß einer besonderen Ausgestaltung der Erfindung ist der Träger kastenartig mit einer ersten und einer zweiten seitlichen Begrenzungswand ausgebildet, wobei die beiden seitlichen Begrenzungswände im eingehängten Zustand des Trägers senkrecht zur Längserstreckung des länglichen Profilelements ausgerichtet sind und das erste Kopplungsmittel durch das dem länglichen Profilelement zugewandte Ende der ersten Begrenzungswand und das zweite Kopplungsmittel durch das dem länglichen Profilelement zugewandte Ende der zweiten Begrenzungswand gebildet wird.

Der Roboter ist in üblicher Art und Weise in x-, y- und z-Richtung verschiebbar. Um den Wirkbereich des Roboters zu vergrößern, sind vorzugsweise wenigstens zwei Arbeitsebene vorgesehen, wobei das längliche Profilelement so angeordnet und ausgerichtet ist, das sich die eingehängten Träger in der ersten Arbeitsebene befinden und die zweite Arbeitsebene unterhalb der eingehängten Träger ausgebildet ist. So können beispielsweise in der unteren, zweiten Arbeitsebene eine Waage, eine Heiz- und/oder eine Rühreinrichtung angeordnet werden.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung des erfindungsgemäßen Robotiksystems,
- Fig. 2: eine Draufsicht im Positionierbereich,
- Fig. 3: eine dreidimensionale Detailansicht im Bereich der Verbindung zwischen Träger und länglichem Profilelement,
- Fig. 4: eine Seitenansicht der Detailansicht gemäß Fig. 3,
- Fig. 5: eine schematische Seitenansicht eines Trägers und eines länglichen Profilelements gemäß einen zweiten Ausführungsbeispiel,
- Fig. 6: eine schematische Seitenansicht eines Trägers und eines länglichen Profilelements gemäß einen dritten Ausführungsbeispiel und
- Fig. 7: eine schematische Seitenansicht eines Trägers und eines länglichen Profilelements gemäß einen vierten Ausführungsbeispiel.

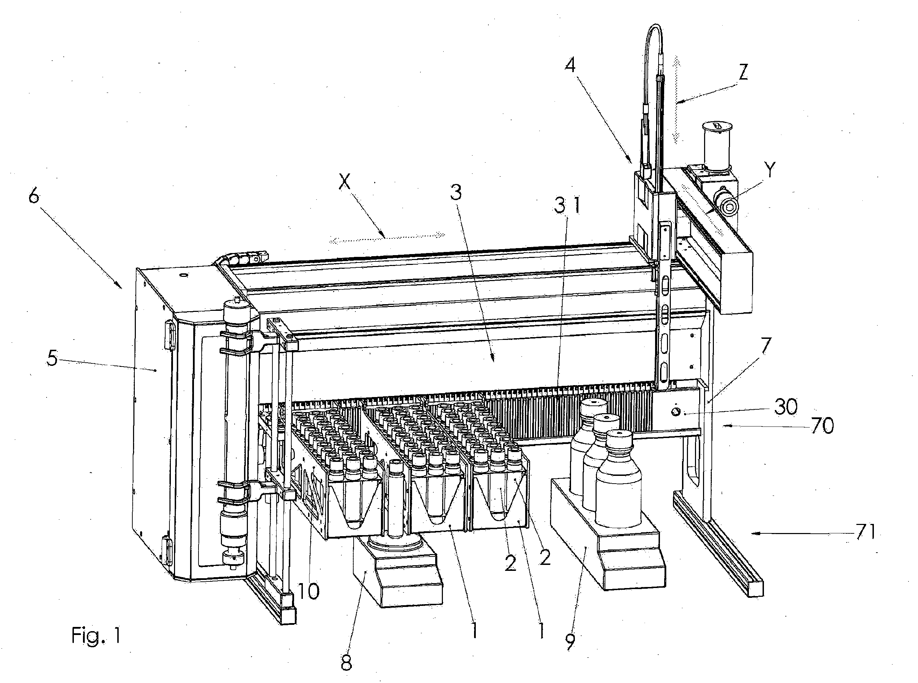

In Fig. 1 ist ein Probenanalyse- und/oder Probenbearbeitungssystem mit einem Robotiksystem dargestellt, wobei das Robotiksystem im Wesentlichen folgenden Bestandteilen aufweist:
- eine Vielzahl von Trägern 1, in denen ein oder mehrere Objekte 2 gehaltert sind,
- einen Positionierbereich 3 mit einer Vielzahl von definierten Positionen zur Positionierung der Träger 1,
- einen Roboter 4 zum Anfahren des oder der Objekte in den Trägern 1 und
- eine in einem Schaltkasten 5 untergebrachte Steuereinheit 6 zur Speicherung der Positionen der Träger 1 und der darin gehalterten Objekte 2 und zur Ansteuerung des Roboters 4.

Der Positionierbereich 3 weist ein längliches Profilelement 30 mit einer Vielzahl von in der Steuereinheit 6 hinterlegten Koppelpositionen 31 auf. Das schienenartig ausgebildete Profilelement 30 ist horizontal an einem Gestell 7 derart gehaltert, dass die Träger 1 in bestimmten Koppelpositionen 31 an dem länglichen Profilelement 30 eingehängt werden können. Der ebenfalls am Gestell 7 gehalterte Roboter 4 ist in x-, y- und z-Richtung verfahrbar. Je nach Anwendung ist er mit einem geeigneten Werkzeug, beispielsweise einer Pipettiernadel, bestückt. Die Reichweite des Roboters 4 ist bezüglich der eingehängten Träger 1 so abgestimmt, dass er jedes der in den Trägern 1 gehalterten Objekte 2 anfahren kann.

Die am länglichen Profilelement 30 eingehängten Träger 1 befinden sich in einer ersten Arbeitsebene 70, die gegenüber der Standfläche des Gestells 7 erhöht ist, sodass sich eine zweite Arbeitsebene 71 unterhalb der eingehängten Träger 1 ausbildet. Diese zweite Arbeitsebene 71, bei der es sich beispielsweise um die Standfläche des gesamten Robotiksystems handelt, dient beispielsweise zur Platzierung einer Waage 8 oder einer Einrichtung 9 zum Rühren oder Heizen.

Die in der zweiten Arbeitsebene angeordneten Einrichtungen werden zweckmäßigerweise so platziert, dass sie nicht durch den Träger 1 verdeckt werden, um die Zugänglichkeit für den Roboter 4 zu gewährleisten.

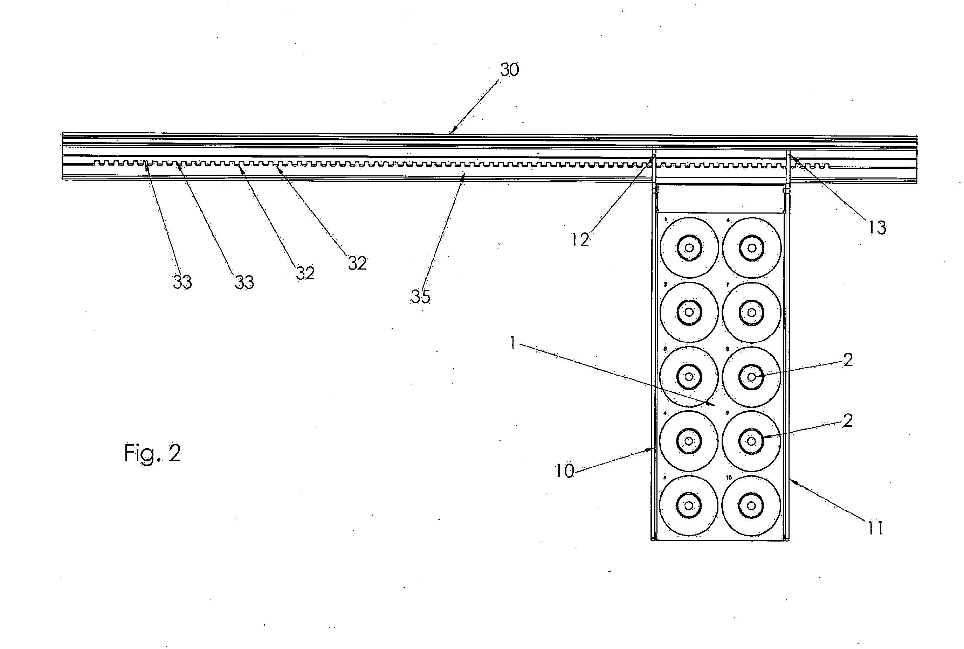

Anhand der Figuren 2 bis 4 wird im Folgenden die Befestigung der Träger 1 am länglichen Profilelement 30 näher erläutert.

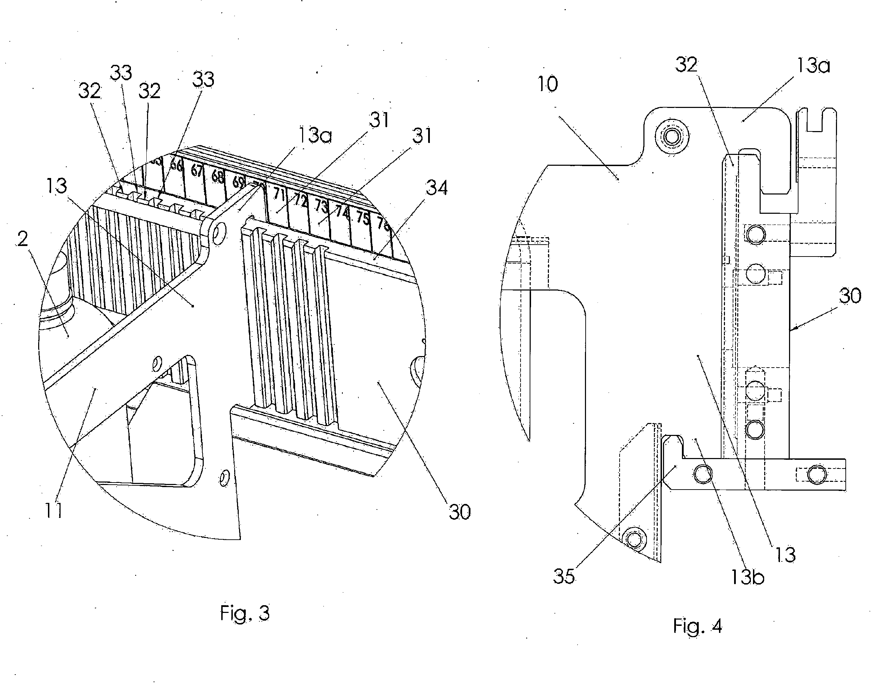

Das längliche Profilelement weist eine Vielzahl von kammartig angeordneten Stegen 32 auf, wobei zwischen den Stegen Zwischenräume 33 ausgebildet sind. Wie auch aus Fig. 1 hervorgeht, sind die Träger 1 kastenartig mit einer ersten und einer zweiten seitlichen Begrenzungswand 10, 11 ausgebildet. Die im eingehängten Zustand der Träger 1 dem länglichen Profilelement 30 zugewandten Enden der Begrenzungswände 10, 11 sind als erste und zweite Kopplungsmittel 12, 13 ausgebildet. Sie sind gleichartig ausgebildet und werden im Folgenden anhand der Figuren 3 und 4 anhand der Kopplungsmittel 13 näher beschrieben.

Das Kopplungsmittel 13 ist mit einem ersten Einhängehaken 13a und einem zweiten Einhängehaken 13b versehen und das längliche Profilelement 30 weist eine obere Stirnkante 34 auf, die der Träger 1 mit dem ersten Einhängehaken der Kopplungsmittel 12, 13 umgreift. Gleichzeitig wird ein Teil der Kopplungsmittel 12, nämlich die vordere Stirnkante der Begrenzungswand 13 in einem der Zwischenräume 33 des länglichen Profilelements 30 spielfrei aufgenommen. Der zweite Einhängehaken 13b der Kopplungsmittel 13 wirkt mit einem entsprechend komplementär ausgebildeten Aufnahmebereich 35 des Profilelements 30 zusammen. Im dargstellten Ausführungsbeispiel wird der Aufnahmebereich 35 durch eine in Richtung des Trägers 1 vorstehende und sich über die Länge des Profilelements 30 erstreckende, hakenartige Leiste gebildet, in die der zweite Einhängehaken 13b eingreift, wie dies insbesondere aus Fig. 4 ersichtlich wird.

Das längliche Profilelement 30 ist horizontal ausgerichtet, wobei die Kopplungsmittel 12, 13 der Träger 1 derart ausgebildet sind, dass der Träger beim Einhängen in vertikaler Richtung in die gewünschte Koppelposition abgesenkt wird. Durch eine entsprechend passgenaue Ausbildung der Einhängehaken 13a, 13b und der Zwischenräume 33 ergibt sich eine sehr stabile und spielfreie Aufhängung der Träger. Die Stabilität wird auch dadurch verstärkt, dass die beiden Kopplungsmittel 12, 13 in Längsrichtung des länglichen Profilelements 30 mit Abstand zueinander am Träger angeordnet sind.

Wie aus Fig. 3 zu ersehen ist, sind die verschiedenen Koppelpositionen mit fortlaufenden Ziffern beschriftet. So ist das Kopplungsmittel 13 des Trägers an der Koppelposition "70" eingehängt.

Der oben beschriebene Positionierbereich 3 ermöglicht somit eine werkzeuglose Anbringung der Träger 1 am länglichen Profilelement 30, wobei die Träger an einer Vielzahl von unterschiedlichen Kopplungspositionen 31 eingehängt werden können.

Je nach Anwendung können verschiedene Arten von Trägern mit gleichen oder unterschiedlichen Objekten zur Anwendung kommen. In der Steuereinheit 6 sind zweckmäßigerweise alle möglichen Trägerarten sowie alle Koppelpositionen hinterlegt. Bei einer Neukonfiguration des Robotiksystems muss der Steuereinheit 6 somit lediglich mitgeteilt werden, welche Art von Träger an welcher Koppelposition eingehängt ist. Durch die Art des Trägers ist dem System bekannt, wie viele Objekte im Träger vorhanden sind und wo sich die Objekte 2 im Träger befinden, sodass der Roboter die Objekte zielgenau anfahren kann. Die Eingabe erfolgt über eine nicht näher dargestellte Tastatur und einen Bildschirm, wobei die Trägerart und auch die Koppelpositionen zweckmäßigerweise aus einem Menü auswählbar ist.

Anstelle einer manuellen Eingabe der Trägerart und Koppelposition kann dies aber auch vollautomatisch erfolgen, in dem beispielsweise die Träger mit einem RFID - System ausgestattet sind, das mit entsprechenden Sensoren an den verschiedenen Koppelpositionen zusammenwirken. Es ist auch denkbar, dass die Art der Träger und die Koppelpositionen mit Hilfe einer Kamera und einer Bildbearbeitung ausgewertet und bestimmt werden.

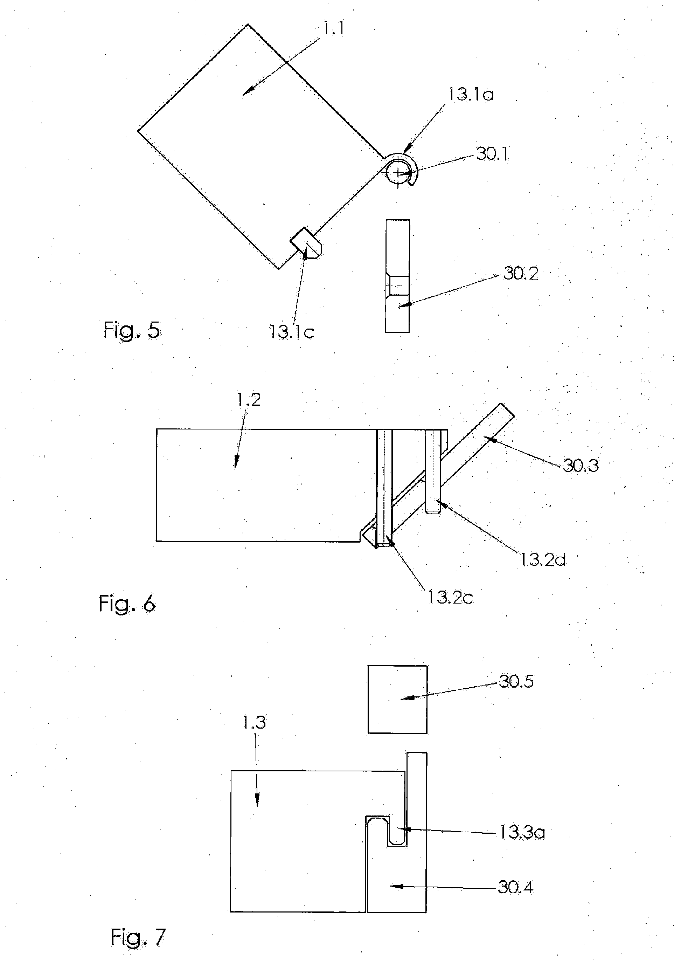

Wenngleich der anhand der Figuren 2 bis 4 beschriebene Pösitionierbereich ein bevorzugtes Ausführungsbeispiel darstellt, sind im Rahmen der Erfindung auch andere Ausgestaltungen denkbar. Einige dieser Varianten sind in den Figuren 5 bis7 dargestellt.

Im Ausführungsbeispiel gemäß Fig. 5 wird das längliche Profilelement durch eine Stange 30.1 und eine Lochleiste 30.2 gebildet, wobei der Träger 1.1 einen ersten, mit der Stange 30.1 in Eingriff kommenden Einhängehaken 13.1a aufweist. Um eine horizontale Verschiebung der Träger 1.1 entlang der Stange 30.1 zu verhindern, weist der Träger 1.1 zudem Zapfen 13.1c auf, die mit der Lochleiste 30.2 zusammenwirken.

Im Ausführungsbeispiel gemäß Fig. 6 ist das längliche Profilelement 30.3 schräg angeordnet und die Träger 1.2 weisen entsprechend schräg ausgebildete Kopplungsmittel auf, die mit Zapfen 13.2c und 13.2b versehen sind, die in entsprechende Aussparungen des länglichen Profilelements 30.3 eingreifen.

Ein weiteres Ausführungsbeispiel ist in Fig. 7 gezeigt, bei der Einhängehaken 13.3a des Trägers 1.3 nicht eine obere Stirnkante des länglichen Profilelements umgreift, sondern vielmehr in einer entsprechenden Aussparung eines 1- oder 2-teiligen Profilelements 30.4/30.5 eingehängt wird.

Bei allen Ausführungsbeispielen wird eine extrem flexible Kombination und Positionierung der Träger mit unterschiedlichen Objekten ermöglicht. Durch das Ein- bzw. Aufhängen der Träger ist der Bereich unterhalb der Träger frei und kann auf einfache Art und Weise sauber gehalten oder für eine zusätzliche Arbeitsebene genutzt werden. Der oben beschriebene Positionierbereich ermöglicht zudem eine freie Kombinierbarkeit und eine extrem schnelle und einfache Austauschbarkeit der Träger.

## Patentansprüche

1. Probenanalyse- und/oder Probenbearbeitungssystem mit einem Robotiksystem, das folgende Bestandteile aufweist:
a. wenigstens einen Träger (1), in dem ein oder mehrere Objekte (2) gehaltert sind,
b. einen Positionierbereich (3) mit einer Vielzahl von definierten Positionen zur Positionierung des wenigstens einen Trägers (1),
c. einen Roboter (4) zum Anfahren jedes der in den Trägern (1) gehalterten Objekte 2 und
d. eine Steuereinheit (6) zur Speicherung der Position des Trägers (1) und der darin gehalterten Objekte (2) und zur Ansteuerung des Roboters (4),
**dadurch gekennzeichnet, dass** der Positionierbereich (3) ein längliches Profilelement (30) mit einer Vielzahl von in der Steuereinheit hinterlegten Koppelpositionen (31) aufweist und der Träger (1) Kopplungsmittel zum Einhängen des Trägers in einer der in der Steuereinheit hinterlegten Koppelpositionen (31) an dem länglichen Profilelement vorsieht, wobei die Träger an einer Vielzahl von unterschiedlichen Kopplungspositionen (31) eingehängt werden können und das längliche Profilelement (30) eine Vielzahl von kammartig angeordneten Stegen (32) aufweist, wobei zwischen den Stegen (32) Zwischenräume (33) ausgebildet sind, in welche die Kopplungsmittel (12, 13) des Trägers (1) bei eingehängtem Träger spielfrei aufgenommen sind.

2. Probenanalyse- und/oder Probenbearbeitungssystem nach Anspruch 1, **dadurch gekennzeichnet, dass** der Roboter (4) an einem Gestell (7) gehaltert ist.

3. Probenanalyse- und/oder Probenbearbeitungssystem nach Anspruch 1, **dadurch gekennzeichnet, dass** das längliche Profilelement (30) an einem Gestell (7) gehaltert ist.

4. Probenanalyse- und/oder Probenbearbeitungssystem nach Anspruch 1, **dadurch gekennzeichnet, dass** die Kopplungsmittel (13) des Trägers wenigstens einen ersten Einhängehaken (13a) aufweisen, der an dem länglichen Profilelement (30) eingehängt wird.

5. Probenanalyse- und/oder Probenbearbeitungssystem nach Anspruch 4, **dadurch** gekenntzeichnet, **dass** die Kopplungsmittel (13) des Trägers (1) wenigstens einen zweiten Einhängehaken (13b) oder Zapfen (13.1c) aufweisen, der mit einem entsprechend komplementär ausgebildeten Aufnahmebereich (35) des länglichen Profilelements (30) zusammenwirkt.

6. Probenanalyse- und/oder Probenbearbeitungssystem nach Anspruch 5, **dadurch gekennzeichnet, dass** der Aufnahmebereich (35) des länglichen Profilelements (30) durch eine in Richtung des Trägers (1) vorstehende und sich über Länge des länglichen Profilelements (30) erstreckende, hakenartige Leiste gebildet wird, in die der zweite Einhängehaken oder Zapfen eingreift.

7. Probenanalyse- und/oder Probenbearbeitungssystem nach Anspruch 1, **dadurch gekennzeichnet, dass** die kammartig angeordneten Stege (32) auf der dem wenigstens einen eingehängten Träger (1) zugewandten oder abgewändten Seite vorgesehen sind.

8. Probenanalyse- und/oder Probenbearbeitungssystem nach Anspruch 1, **dadurch gekennzeichnet, dass** das längliche Profilelement (30) horizontal ausgerichtet ist und das längliche Profilelement (30) und die Kopplungsmittel (12, 13) des Trägers (1) derart ausgebildet sind, dass der Träger (1) beim Einhängen in vertikaler Richtung in die gewünschte Koppelposition abgesenkt wird.

9. Probenanalyse- und/oder Probenbearbeitungssystem nach Anspruch 1, **dadurch gekennzeichnet, dass** die Kopplungsmittel durch ein erstes und ein zweites Kopplungsmittel (12, 13) gebildet werden, die gleichartig ausgebildet und im eingehängten Zustand des Trägers (1) in Längsrichtung des länglichen Profilelements (30) mit Abstand zueinander am Träger (1) angeordnet sind.

10. Probenanalyse- und/oder Probenbearbeitungssystem nach Anspruch 9, **dadurch gekennzeichnet, dass** der Träger (1) kastenartig mit einer ersten und einer zweiten seitlichen Begrenzungswand (10, 11) ausgebildet ist, wobei die beiden seitlichen Begrenzungswände (10, 11) im eingehängten Zustand des Trägers (1) senkrecht zur Längserstreckung des länglichen Profilelements (30) ausgerichtet sind und das erste Kopplungsmittel (12) durch das dem länglichen Profilelement zugewandte Ende der ersten Begrenzungswand (10) und das zweite Kopplungsmittel (13) durch das dem länglichen Profilelement zugewandte Ende der zweiten Begrenzungswand (11) gebildet werden.

11. Probenanalyse- und/oder Probenbearbeitungssystem nach Anspruch 1, **dadurch gekennzeichnet, dass** wenigstens zwei Arbeitsebenen (70, 71) vorgesehen sind, wobei das längliche Profilelement (30) so angeordnet und ausgerichtet ist, dass sich die eingehängten Träger (1) in der ersten Arbeitsebene (70) befinden und die zweite Arbeitsebene (71) unterhalb der eingehängten Träger (1) ausgebildet ist.

## Claims

1. Sample analysis and/or sample processing system having a robotic system which has the following components:
a. at least one carrier (1) in which one or more objects (2) are retained,
b. a positioning region (3) having a plurality of defined positions for positioning the at least one carrier (1),
c. a robot (4) for approaching each of the objects (2) retained in the carrier (1) and
d. a control unit (6) for storing the position of the carrier (1) and the objects (2) which are retained therein and for controlling the robot (4),
**characterised in that** the positioning region (3) has an elongate profile-member (30) having a plurality of coupling positions (31) which are stored in the control unit and the carrier (1) provides coupling means for suspending the carrier on the elongate profile-member in one of the coupling positions (31) stored in the control unit, wherein the carriers can be suspended at a plurality of different coupling positions (31) and **in that** the elongate profile-member has a plurality of webs (32) which are arranged in a comb-like manner, there being formed between the webs (32) intermediate spaces (33) in which the coupling means (12, 13) of the carrier (1) are received in a play-free manner when the carrier is in the suspended state.

2. Sample analysis and/or sample processing system according to claim 1, **characterised in that** the robot (4) is retained on a frame (7).

3. Sample analysis and/or sample processing system according to claim 1, **characterised in that** the elongate profile-member (30) is retained on a frame (7).

4. Sample analysis and/or sample processing system according to claim 1, **characterised in that** the coupling means (13) of the carrier have at least a first suspension hook (13a) which is suspended on the elongate profile-member (30).

5. Sample analysis and/or sample processing system according to claim 4, **characterised in that** the coupling means (13) of the carrier (1) have at least a second suspension hook (13b) or pin (13.1c) which co-operates with a receiving region (35) of the elongate profile-member (30) that is constructed accordingly in a complementary manner.

6. Sample analysis and/or sample processing system according to claim 5, **characterised in that** the receiving region (35) of the elongate profile-member (30) is formed by a hook-like bar which protrudes in the direction of the carrier (1) and which extends over the length of the elongate profile-member (30) and in which the second suspension hook or pin engages.

7. Sample analysis and/or sample processing system according to claim 1, **characterised in that** the webs (32) which are arranged in a comb-like manner are provided at the side facing or the side remote from the at least one suspended carrier (1).

8. Sample analysis and/or sample processing system according to claim 1, **characterised in that** the elongate profile-member (30) is orientated in a horizontal manner and the elongate profile-member (30) and the coupling means (12, 13) of the carrier (1) are constructed in such a manner that the carrier (1), when suspended in the vertical direction, is lowered into the desired coupling position.

9. Sample analysis and/or sample processing system according to claim 1, **characterised in that** the coupling means are formed by a first and a second coupling means (12, 13) which are constructed in an identical manner and which, when the carrier (1) is in the suspended state, are arranged on the carrier (1) in the longitudinal direction of the elongate profile-member (30) with spacing from each other.

10. Sample analysis and/or sample processing system according to claim 10, **characterised in that** the carrier (1) is constructed in a box-like manner with a first and a second lateral boundary wall (10, 11), the two lateral boundary walls (10, 11) being orientated perpendicularly relative to the longitudinal extent of the elongate profile-member (30) when the carrier (1) is in the suspended state and the first coupling means (12) being formed by the end of the first boundary wall (10) facing the elongate profile-member and the second coupling means (13) being formed by the end of the second boundary wall (11) facing the elongate profile-member.

11. Sample analysis and/or sample processing system according to claim 1, **characterised in that** at least two operating levels (70, 71) are provided, the elongate profile-member (30) being arranged and orientated in such a manner that the suspended carriers (1) are located in the first operating level (70) and the second operating level (71) is formed below the suspended carriers (1).

## Revendications

1. Système d'analyse d'échantillons et / ou de traitement d'échantillons avec un système robotique qui est doté des composants suivants:
a) au moins un support (1), dans lequel sont maintenus plusieurs objets (2),
b) une zone de positionnement (3) avec un grand nombre de positions définies pour le positionnement du support (1) au moins prévu,
c) un robot (4) pour positionner chacun des objets (2) maintenus dans les supports (1) et
d) une unité de commande (6) pour la mémorisation de la position du support (1) et des objets (2) maintenus dans celui-ci et pour la commande du robot (4),
**caractérisé en ce que** la zone de positionnement (3) est dotée d'un élément profilé allongé (30), avec un grand nombre de positions de couplage (31) qui sont mémorisées dans l'unité de commande et que le support (1) prévoit des moyens de couplage pour suspendre le support à l'élément profilé allongé dans l'une des positions de couplage (31) qui sont mémorisées dans l'unité de commande, sachant que les supports peuvent être suspendus dans un grand nombre de positions de couplage (31) et que l'élément profilé allongé (30) est doté d'un grand nombre de pattes (32) agencées en forme de peigne (32), sachant que sont formés, entre les pattes (32), des intervalles (33) dans lesquels les moyens de couplage (12, 13) du support (1) sont logés sans jeu quand ledit support est suspendu.

2. Système d'analyse d'échantillons et / ou de traitement d'échantillons selon la revendication 1, **caractérisé en ce que** le robot (4) est maintenu sur un bâti (7).

3. Système d'analyse d'échantillons et / ou de traitement d'échantillons selon la revendication 1, **caractérisé en ce que** l'élément profilé allongé (30) est maintenu sur un bâti (7).

4. Système d'analyse d'échantillons et / ou de traitement d'échantillons selon la revendication 1, **caractérisé en ce que** les moyens de couplage (13) du support sont dotés d'au moins un premier crochet de suspension (13a) qui est destiné à être suspendu à l'élément profilé allongé (30).

5. Système d'analyse d'échantillons et / ou de traitement d'échantillons selon la revendication 4, **caractérisé en ce que** les moyens de couplage (13) du support (1) sont dotés d'un deuxième crochet de suspension (13b) ou d'un tourillon (13.1c) qui coopère avec une zone de réception (35) complémentaire de l'élément profilé allongé (30).

6. Système d'analyse d'échantillons et / ou de traitement d'échantillons selon la revendication 5,
**caractérisé en ce que** la zone de réception (35) de l'élément profilé allongé (30) est formée par une baguette genre crochet de suspension, qui fait saillie dans la direction du support (1) et s'étend sur la longueur de l'élément profilé allongé (30), et dans laquelle s'engage le deuxième crochet de suspension ou tourillon.

7. Système d'analyse d'échantillons et / ou de traitement d'échantillons selon la revendication 1, **caractérisé en ce que** les pattes disposée en forme de peigne (32) sont prévues sur le côté dirigé vers ou à l'opposé de l'au moins un support (1) suspendu.

8. Système d'analyse d'échantillons et / ou de traitement d'échantillons selon la revendication 1, **caractérisé en ce que** l'élément profilé allongé (30) est orienté horizontalement et q u e ledit élément profilé allongé (30) et les moyens de couplage (12, 13) du support (1) sont conçus de telle manière que le support (1), lors de la suspension dans la direction verticale, est abaissé dans la position de couplage désirée.

9. Système d'analyse d'échantillons et / ou de traitement d'échantillons selon la revendication 1, **caractérisé en ce que** les moyens de couplage sont formés par un premier moyen de couplage et un deuxième moyen de couplage (12, 13) qui sont configurés de la même manière et qui, quand le support (1) est à l'état suspendu, sont disposés sur le support (1), à distance l'un de l'autre, dans la direction longitudinale de l'élément profilé allongé (30).

10. Système d'analyse d'échantillons et / ou de traitement d'échantillons selon la revendication 9, **caractérisé en ce que** le support (1) est configuré en forme de caisson avec une première paroi et une deuxième paroi de délimitation (10, 11), sachant que les deux parois de délimitation latérales (10, 11) sont orientées perpendiculairement au sens de la projection longitudinale de l'élément profilé allongé (30) quand le support (1) est à l'état suspendu et que le premier moyen de couplage (12) est formé par l'extrémité de la première paroi de délimitation (10), orientée vers l'élément profilé allongé et le deuxième moyen de couplage (13) est formé par l'extrémité de la deuxième paroi de délimitation (11), orientée vers l'élément profilé allongé.

11. Système d'analyse d'échantillons et / ou de traitement d'échantillons selon la revendication 1, **caractérisé en ce que** sont prévus au moins deux plans de travail (70, 71), sachant que l'élément profilé allongé (30) est disposé de telle manière que les supports (1) suspendus se trouvent sur le premier plan de travail (70) et que le deuxième plan de travail (71) se trouve au-dessous des supports (1) suspendus.
